# EUROPEAN PATENT SPECIFICATION

(11) **EP 3 666 366 B1**
(45) Date of publication and mention of the grant of the patent: **24.03.2021**
(21) Application number: 19211068.2
(22) Date of filing: 22.11.2019
(51) Int. Cl.: B01D 53/14

(54) **COMPOSITE DECARBONIZATION SOLUTION ADDED WITH CARBON NANO TUBE FOR RECYCLING CARBON DIOXIDE IN A MIXED GAS**
ZUSAMMENSETZUNG ENTHALTEND DEKARBONISIERUNGSLÖSUNG UND KOHLENSTOFFNANORÖHRCHEN ZUM RECYCELN VON KOHLENDIOXID AUS EINEM MISCHGAS
SOLUTION COMPOSITE DE DÉCARBONISATION ADDITIONNÉE DE NANOTUBES DE CARBONE POUR LE RECYCLAGE DU DIOXYDE DE CARBONE DANS UN MÉLANGE GAZEUX

(30) Priority: 13.12.2018 CN 201811521164
(43) Date of publication of application: 17.06.2020
(73) Proprietor: Dalian University of Technology, Dalian, Liaoning 116024 (CN)
(72) Inventor: ZHANG, Yongchun, Dalian, Liaoning 116024 (CN); LI, Xiaojing, Dalian, Liaoning 116024 (CN); CHEN, Shaoyun, Dalian, Liaoning 116024 (CN)
(74) Representative: Wilson Gunn

(56) References cited:
- WO-A1-2012/103653
- CN-A- 101 091 864
- US-A1- 2016 030 880
- US-A1- 2016 115 034
- US-A1- 2016 250 591

## Description

### TECHNICAL FIELD

The present invention belongs to the technical field of gas separation, relates to research on the strengthening of the process of desorbing CO₂ in an organic amine solution, in particular to a hydroxyethyl-ethylenediamine mixed decarbonization solution and several types of solid catalysts.

### BACKGROUND

In recent years, environmental problems caused by greenhouse effect become more and more serious. As everyone knows, carbon dioxide is a main component of forming greenhouse gas, and thus the emission problem of carbon dioxide causes worldwide attention. The trapping, conversion, use and storage of CO₂ also become the dedicated research fields of science researchers. At present, methods for removing carbon dioxides from the mixed gas mainly include a physical absorption method, a chemical absorption method, a membrane separation method and a biological method. At present, the first two methods are used mainly. The physical absorption needs to be carried out under high pressure, and thus the method is mainly applicable for gas sources with higher content of carbon dioxide; however, the chemical absorption method can be carried out at normal pressure or under relatively low pressure, and thus the method is more applicable for treating gas sources with relatively low content of carbon dioxide.

The chemical absorption method has the characteristics of high absorption rate and large absorption quantity, but also has the disadvantages of high regeneration temperature, high desorption energy consumption, high corrosion and the like. In order to overcome the disadvantage of the chemical absorption method that the regeneration energy consumption is high, the science researchers of every country dedicate to the methods that the formula of the solution is changed and the catalyst is added so as to improve the desorption rate and reduce the desorption energy consumption.

The Chinese patent (CN 101091864A) in 2007 discloses a mixed decarbonization solution, and the decarbonization solution has the advantages of large absorption capacity, high degree of purification, large desorption rate, low regeneration energy consumption and the like. CN 101091864A discloses a composite decarburization solution for recovering carbon dioxide in a mixed gas, which can recover or remove carbon dioxide in a mixed gas, and is characterized in that: the composite decarbonization solution is composed of a main absorption component, an auxiliary absorption component, an activation component, a corrosion inhibitor, antioxidant and water, where the main absorption component is 2-(2-aminoethylamino)ethanol (AEE), the auxiliary absorption component contains 2-amino-2-methyl-1-propanol (AMP), N-methyldiethanolamine (MDEA) and triethanolamine (TEA), the activation component contains ethanolamine (MEA), diethanolamine (DEA) and piperazine (PZ), the corrosion inhibitor is sodium aluminate, and the antioxidant is sodium sulfite and acetic acid copper.

The Chinese patent (CN 104437002A) in 2014 discloses carbonic anhydrase with heat stability, the desorption rate of CO₂ can be promoted effectively under different relatively low desorption temperatures, the desorption energy consumption is reduced, and the energy sources are saved. The enzyme activity concentration of the carbonic anhydrase enzyme solution with heat stability is 32000 U/mL, and the desorption temperature is 60-80°C

Document WO 2012/103653 A1 discloses a process for enzymatic catalysis of a dehydration reaction of CO₂ from an ion-rich aqueous mixture including bicarbonate and hydrogen ions and enzymatic particles. The absorption compound may include a primary amine, a secondary amine, a tertiary amine, a primary alkanolamine, a secondary alkanolamine, a tertiary alkanolamine, a primary amino acid, a secondary amino acid, a tertiary amino acid, or a carbonate compound, or a combination thereof (e.g. 2-(2-aminoethylamino)ethanol (AEE) among others).

The Chinese patent (CN 107596919A) in 2017 discloses a membrane method for desorbing CO2 in an alkanolamine solution absorbent-rich solution, a polypropylene hollow fiber membrane contactor is taken as a desorption device, and the desorption temperature is 30-60°C.

Above all, the desorption energy consumption can be reduced by using the organic amine method, the biological enzyme method and the membrane method, but a larger promotion space exists in the aspect of improving the desorption rate.

### SUMMARY

The present invention aims to solve the problem that the decarbonization energy consumption in an existing organic amine solution is high, and the desorption rate of a hydroxyethyl-ethylenediamine (AEEA) mixed decarbonization solution is improved by adding solid catalysts.

The technical solution of the present invention is as follows:
The present invention provides a composite decarbonization solution for recycling carbon dioxide in a mixed gas, where a solid catalyst is added to an original AEEA mixed decarbonization solution (CN 101091864A), and the solid catalyst is a carbon nano tube.

The solid catalyst is divided into four types of substances:
(1) a single-walled carbon nano tube;
(2) a double-walled carbon nano tube;
(3) a multi-walled carbon nano tube; and
(4) a modified multi-walled carbon nano tube, such as MWCNT-COOH, MWCNT-OH.

A configuration method of the composite decarbonization solution for recycling carbon dioxide in the mixed gas includes the following steps: adding different forms (powder and particles) of solid catalysts to the AEEA mixed decarbonization solution, absorbing the solid catalyst at the temperature of 40°C for 70 min, desorbing the solid catalyst for 90 min after the temperature is raised to 120°C, calculating an average speed 30 min before desorption, and determining the performances of the catalysts by comparing the average speed 30 min before desorption.

The present invention has the beneficial effects that, the solid catalyst is added to the composite decarbonization solution of the present invention, to reduce the desorption energy consumption of CO₂ in the AEEA water solution, which is mainly shown in two respects: firstly, the time of beginning desorption is advanced by 5 min, and secondly, the desorption rate is increased by 20% to 40%.

### BRIEF DESCRIPTION OF THE DRAWINGS

FIG. 1 indicates absorption loading capacities after different mass fractions of MWCNT-COOH are added.
FIG. 2 indicates desorption rates after different mass fractions of MWCNT-COOH are added.
FIG. 3 indicates average desorption rates after different mass fractions of MWCNT-COOH are added.

### DETAILED DESCRIPTION

The following further describes specific embodiments of the present invention in combination with the following accompanying drawings and technical proposals.

### Embodiment 1

100 mL of an AEEA mixed solution is added in a 250 mL three-necked flask, different mass fractions (0%, 0.01%, 0.02%, 0.03% and 0.04%) of MWCNT-COOH are added respectively, the gas speed of introduced CO₂ is 0.168 L/min, the MWCNT-COOH are absorbed for 70 min at the temperature of 40°C, the MWCNT-COOH are desorbed for 90 min after the temperature is raised to 120°C, the absorption and desorption rates are calculated, and the performance of the catalyst is judged by comparing the time of beginning desorption and an average speed 30 min before desorption.

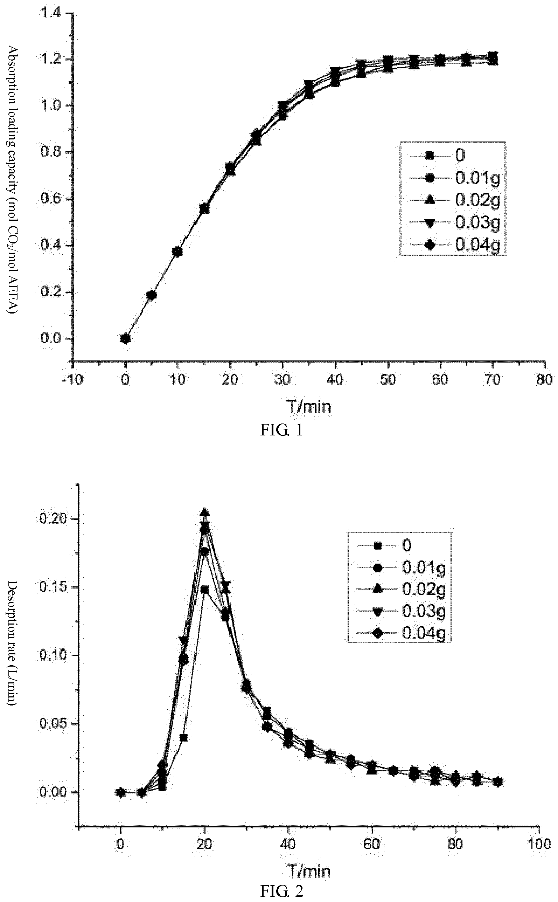

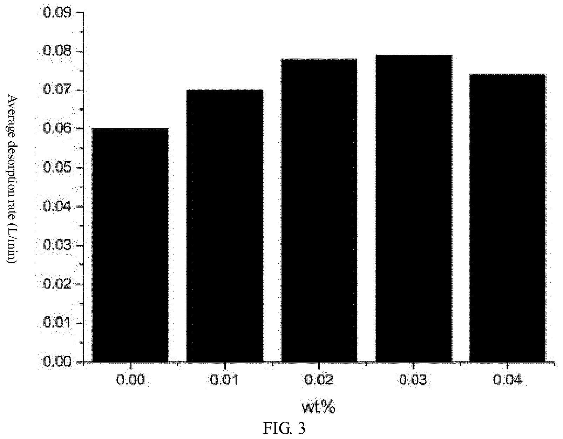

As shown in FIG. 1, MWCNT-COOH of different mass fractions are free of an inhibiting effect for absorbing CO₂ in the solution; as shown in FIG. 2 and FIG. 3, a solution without MWCNT-COOH begins desorption 15 min later with a 5-minute delay, the desorption rate of the AEEA solution added with MWCNT-COOH is obviously improved, and the average desorption rate of the solution with the mass fraction of 0.03% in former 30 min is increased by 33%.

### Embodiment 2

100 mL of an AEEA mixed solution is added in a 250 mL three-necked flask, different mass fractions (0%, 0.01%, 0.02%, 0.03% and 0.04%) of single-walled carbon nano tubes are added respectively, the gas speed of introduced CO₂ is 0.168 L/min, the single-walled carbon nano tubes are absorbed for 70 min at the temperature of 40°C, the single-walled carbon nano tubes are desorbed for 90 min after the temperature is raised to 120°C, the absorption and desorption rates and the average speed 30 min before desorption are calculated.

Statistical results indicate that, when the mass fraction of the added single-walled carbon nano tubes is about 0.02%, the average speed 30 min before desorption is fastest and reaches to 0.7 to 0.8 L/min, and the average desorption rate is increased by 20% to 30%.

### Embodiment 3

100 mL of an AEEA mixed solution is added in a 250 mL three-necked flask, powdery and granular carbon nano tubes with the mass fraction of 0.1% are added respectively, the gas speed of introduced CO₂ is 0.168 L/min, the carbon nano tubes are absorbed for 70 min at the temperature of 40°C, the carbon nano tubes are desorbed for 90 min after the temperature is raised to 120°C, the absorption and desorption rates and the average speed 30 min before desorption are calculated.

The average desorption rates are calculated by using the same method, the results show that the desorption effect of the granular catalyst with the mass fraction of 0.1% is higher and the effect of the powdery catalyst is lower.

## Claims

1. A composite decarbonization solution for recycling carbon dioxide in a mixed gas, wherein a solid catalyst is added to an original hydroxyethyl-ethylenediamine (AEEA) mixed decarbonization solution, and the solid catalyst is a carbon nano tube.

2. The composite decarbonization solution according to claim 1, wherein the solid catalyst comprises four types of substances:
(1) a single-walled carbon nano tube;
(2) a double-walled carbon nano tube;
(3) a multi-walled carbon nano tube; and
(4) a modified multi-walled carbon nano tube.

3. The composite decarbonization solution according to claim 1, wherein the solid catalyst comprises a modified multi-walled carbon nano tube.

4. The composite decarbonization solution according to any of claims 1 to 3, wherein the amount of the added solid catalyst is 0.01% to 0.1% of the mass percentage of the AEEA mixed decarbonization solution.

5. The composite decarbonization solution according to any of claims 1 to 4, wherein the solid catalyst is granular or powdery.

## Patentansprüche

1. Zusammengesetzte Entkarbonisierungslösung zum Rezyklieren von Kohlenstoffdioxid in einem Mischgas, wobei ein fester Katalysator einer ursprünglichen gemischten Hydroxyethylethylendiamin-(AEEA)-Entkarbonisierungslösung zugesetzt wird und der feste Katalysator ein Kohlenstoff-Nanoröhrchen ist.

2. Zusammengesetzte Entkarbonisierungslösung nach Anspruch 1, wobei der feste Katalysator vier Typen von Substanzen umfasst:
(1) ein einwandiges Kohlenstoff-Nanoröhrchen;
(2) ein doppelwandiges Kohlenstoff-Nanoröhrchen;
(3) ein vielwandiges Kohlenstoff-Nanoröhrchen; und
(4) ein modifiziertes vielwandiges Kohlenstoff-Nanoröhrchen.

3. Zusammengesetzte Entkarbonisierungslösung nach Anspruch 1, wobei der feste Katalysator ein modifiziertes vielwandiges Kohlenstoff-Nanoröhrchen umfasst.

4. Zusammengesetzte Entkarbonisierungslösung nach einem der Ansprüche 1 bis 3, wobei die Menge des zugesetzten Katalysators 0,01 % bis 0,1 % des Massenanteils in Prozent der gemischten AEEA-Entkarbonisierungslösung beträgt.

5. Zusammengesetzte Entkarbonisierungslösung nach einem der Ansprüche 1 bis 4, wobei der feste Katalysator körnig oder pulvrig ist.

## Revendications

1. Solution de décarbonisation composite pour recycler du dioxyde de carbone dans un gaz mixte, dans laquelle un catalyseur solide est ajouté à une solution de décarbonisation mixte d'hydroxyéthyl-éthylènediamine (AEEA) d'origine, et le catalyseur solide est un nanotube de carbone.

2. Solution de décarbonisation composite selon la revendication 1, dans laquelle le catalyseur solide comprend quatre types de substances :
(1) un nanotube de carbone à une paroi ;
(2) un nanotube de carbone à deux parois ;
(3) un nanotube de carbone à plusieurs parois ; et
(4) un nanotube de carbone à plusieurs parois modifié.

3. Solution de décarbonisation composite selon la revendication 1, dans laquelle le catalyseur solide comprend un nanotube de carbone à plusieurs parois modifié.

4. Solution de décarbonisation composite selon l'une quelconque des revendications 1 à 3, dans laquelle la quantité de catalyseur solide ajouté est de 0,01 % à 0,1 % du pourcentage en masse de la solution de décarbonisation mixte d'AEEA.

5. Solution de décarbonisation composite selon l'une quelconque des revendications 1 à 4, dans laquelle le catalyseur solide est granulaire ou en pulvérulent.
